# EUROPÄISCHE PATENTSCHRIFT

(11) **EP 2 899 083 B1**
(45) Veröffentlichungstag und Bekanntmachung des Hinweises auf die Patenterteilung: **20.04.2022**
(21) Anmeldenummer: 14003893.6
(22) Anmeldetag: 19.11.2014
(51) Int. Cl.: B60W 30/18, B60W 50/14

(54) **Verfahren und Fahrerassistenzsystem zur Unterstützung eines Fahrers eines Kraftfahrzeuges bei einem Fahrspurwechsel**
Method and driver assistance system for assisting a driver of a motor vehicle when changing lanes
Procédé et système d'assistance du conducteur pour l'assistance d'un conducteur de véhicule automobile lors d'un changement de voie de circulation

(30) Priorität: 28.01.2014 DE 102014001115
(43) Veröffentlichungstag der Anmeldung: 29.07.2015
(73) Patentinhaber: MAN Truck & Bus SE, 80995 München (DE)
(72) Erfinder: Kraus, Sven, 85748 Garching (DE); Dörner, Karlheinz, 85757 Karlsfeld (DE); Schwertberger, Walter, 82278 Althegnenberg (DE); Römersperger, Xaver, 84453 Mühldorf (DE); Völl, Sebastien, 85221 Dachau (DE); Reule, Michael, 85354 Freising (DE)
(74) Vertreter: Liebl, Thomas

(56) Entgegenhaltungen:
- DE-A1-102005 036 714
- DE-A1-102006 010 275
- DE-A1-102011 016 771
- DE-A1-102011 080 928
- DE-A1-102011 116 822

## Beschreibung

Verfahren und Fahrerassistenzsystem zur Unterstützung eines Fahrers eines Kraftfahrzeuges bei einem Fahrspurwechsel Die Erfindung betrifft ein Verfahren zur Unterstützung eines Fahrers eines Kraftfahrzeuges, insbesondere eines Nutzfahrzeuges nach Patentanspruch 1, bei einem Fahrspurwechsel und ein Fahrerassistenzsystem zur Unterstützung eines Fahrers eines Kraftfahrzeuges, insbesondere eines Nutzfahrzeuges, bei einem Fahrspurwechsel nach Patentanspruch 7.

Moderne Kraftfahrzeuge weisen regelmäßig eine Reihe von Fahrerassistenzsystemen auf, die den Fahrer des Kraftfahrzeuges unterstützen. Hierbei gibt es auch zahlreiche Maßnahmen, die einen sicheren Fahrspurwechsel gewährleisten sollen. Eine häufig bei Personenkraftfahrzeugen verwendete Strategie ist es dabei, bei einem Erfassen eines in einem für den Fahrspurwechsel relevanten Gefahrenbereich fahrenden Fremdfahrzeuges mittels des Fahrerassistenzsystems ein visuelles Warnsignal an den Fahrer des Personenkraftfahrzeuges auszugeben. Betätigt der Fahrer zudem einen Fahrtrichtungsanzeiger in Richtung des Gefahrenbereichs wird zusätzlich zu dem visuellen Warnsignal ein akustisches Warnsignal an den Fahrer ausgegeben. Die Verwendung einer solchen Warnstrategie kann jedoch insbesondere bei längeren Fahrten und wiederholten Auftreten des stets gleichen Warnsignals gegebenenfalls zu einem Gewöhnungseffekt führen.

Eine weitere Warnstrategie ist aus der EP 1 312 506 B1 bekannt. Diese offenbart ein Verfahren, bei dem ein Fahrer eines ersten Kraftfahrzeuges bei einem Fahrspurwechselmanöver unterstützt wird, wenn sich ein auf der gleichen Fahrspur wie das erste Kraftfahrzeug fahrendes zweites Kraftfahrzeug von hinten an das erste Kraftfahrzeug annähert. Dabei wird ein erstes Warnsignal erzeugt, wenn erfasst wird, dass sich das zweite Kraftfahrzeug von hinten an das erste Kraftfahrzeug annähert und sich das erste Kraftfahrzeug an eine an die Fahrspur des ersten Kraftfahrzeugs angrenzende Fahrspur annähert. Das Warnsignal ist hier als optisches Signal ausgebildet. Dieses optische Signal wird zu einem akustischen Signal, wenn der Fahrer des ersten Kraftfahrzeuges zudem noch einen Fahrtrichtungsanzeiger betätigt, was als eindeutiges Zeichen der Absicht des Fahrers für einen Fahrspurwechsel interpretiert wird.

Aus den Druckschrifte DE 10 2011 016771 A1 und DE 10 2006 010275 A1 sind andere Verfahren zur Unterstützung des Fahrers bei Spurwechselmanöver bekannt.

Es ist daher Aufgabe der Erfindung, ein Verfahren sowie eine Vorrichtung zur Unterstützung eines Fahrers eines Kraftfahrzeuges, insbesondere eines Nutzfahrzeuges, bei einem Fahrspurwechsel bereitzustellen, bei dem bzw. bei denen die Sicherheit und/oder der Fahrerkomfort bei einem Fahrspurwechsel erhöht ist.

Diese Aufgabe wird durch die Merkmale der unabhängigen Ansprüche gelöst. Bevorzugte Weiterbildungen sind in den Unteransprüchen offenbart.

Gemäß Anspruch 1 betrifft die Erfindung ein Verfahren zur Unterstützung eines Fahrers eines Kraftfahrzeuges, insbesondere eines Nutzfahrzeuges, bei einem Fahrspurwechsel, mit einer Überwachungseinrichtung, mittels der Fahrzeuge, die sich in der Umgebung des Kraftfahrzeugs auf wenigstens einer seitlich an die Fahrspur des Kraftfahrzeugs angrenzenden Seitenspur befinden, erfasst werden, mit einem durch den Fahrer betätigbaren Fahrtrichtungsanzeiger, mittels dem der Fahrer seine Absicht zur Durchführung eines Fahrspurwechsels auf eine Seitenspur ankündigt, mit einer Spurwechselerkennungseinrichtung zur Erkennung eines Spurwechsels des Kraftfahrzeuges auf eine Seitenspur, und mit einer Signalausgabeeinrichtung zur Ausgabe eines ersten und eines zweiten Warnsignals an den Fahrer, wobei das erste Warnsignal ausgegeben wird, wenn mittels der Überwachungseinrichtung wenigstens ein Fahrzeug auf einer Seitenspur erfasst werden und der Fahrer den Fahrtrichtungsanzeiger derart betätigt, dass er einen Fahrspurwechsel auf diese Seitenspur ("diese Seitenspur" bedeutet dabei hier und nachfolgend stets diejenige Seitenspur, auf der mittels der Überwachungseinrichtung mindestens ein Fahrzeug erkannt wurde) ankündigt, und wobei das zweite Warnsignal ausgegeben wird, wenn mittels der Überwachungseinrichtung wenigstens ein Fahrzeug auf einer Seitenspur erfasst werden, der Fahrer den Fahrtrichtungsanzeiger derart betätigt, dass er einen Fahrspurwechsel auf diese Seitenspur ankündigt und, zudem mittels der Spurwechselerkennungseinrichtung ein Spurwechsel auf diese Seitenspur erkannt wird, wobei das zweite Warnsignal eine höhere Warnintensität aufweist als das erste Warnsignal, wobei das erste Warnsignal als visuelles Signal und das zweite Warnsignal als akustisches Signal oder als visuelles und akustisches ausgebildet ist.

Auf diese Weise wird der Fahrerkomfort erhöht, da das erste Warnsignal erst an den Fahrer ausgegeben wird, wenn er seine eindeutige Absicht zur Durchführung des Fahrspurwechsels durch Betätigung des Fahrtrichtungsanzeigers ankündigt. Dies ist insbesondere bei Nutzfahrzeugen vorteilhaft, da diese, beispielsweise bei Autobahnfahrten, aufgrund ihrer geringen Eigengeschwindigkeit sehr häufig überholt werden. Des Weiteren wird dem Fahrer bei einer Betätigung des Fahrtrichtungsanzeigers zuverlässig über das erste Warnsignal mitgeteilt, ob ein gefahrloser Fahrspurwechsel durchgeführt werden kann bzw. ob sich Fahrzeuge im Gefahrenbereich befinden. Des Weiteren wird dadurch ein Gewöhnungseffekt zuverlässig vermieden.

Erfindungsgemäß weist das zweite Warnsignal eine höhere Warnintensität auf als das erste Warnsignal. Auf diese Weise ist der Komfort für den Fahrer des Kraftfahrzeuges weiter erhöht, da beim Erfassen eines oder mehrerer Fahrzeuge auf einer Seitenspur und einer Betätigung des Fahrtrichtungsanzeigers zur Ankündigung des Fahrspurwechsels auf die Seitenspur das Warnsignal mit geringerer Warnintensität ausgegeben wird. Erst beim zusätzlichen Erkennen des Spurwechsels auf die Seitenspur durch die Spurwechselerkennungseinrichtung bzw. bei einer besonders gefährlichen Verkehrssituation wird das zweite Warnsignal mit höherer Warnintensität ausgegeben.

Erfindungsgemäß ist das erste Warnsignal als visuelles Signal und das zweite Warnsignal als akustisches oder als visuelles und akustisches Signal ausgebildet, um die unterschiedliche Warnintensität der Warnsignale zu umzusetzen. Besonders bevorzugt kann zudem eine durch den Fahrer betätigbare Aktivierungseinrichtung vorgesehen sein, mittels der die akustischen und/oder haptischen Signale aktiviert und deaktiviert werden können. Dadurch wird der Fahrerkomfort weiter erhöht.

In einer konkreten Ausführung des erfindungsgemäßen Verfahrens kann die Signalausgabeeinrichtung in einem, in Fahrzeugquerrichtung gesehen, linken und rechten Innenraumbereich des Kraftfahrzeuges jeweils wenigstens ein Signalausgabeelement aufweisen, mittels dem das erste und das zweite Warnsignal ausgegeben werden können, wobei bevorzugt vorgesehen ist, dass das wenigstens eine linksseitige Signalausgabeelement nur bei einem Spurwechsel nach links die Warnsignale ausgibt und das wenigstens eine rechtsseitige Signalausgabeelement nur bei einem Spurwechsel nach rechts die Warnsignale ausgibt. Durch diese Anordnung der Signalausgabeelemente ist bei einem Spurwechsel die Erkennung und/oder die Zuordnung der Warnsignale für den Fahrer des Kraftfahrzeuges deutlich vereinfacht.

Bevorzugt kann mittels der Spurwechselerkennungseinrichtung ein Überqueren einer die Seitenspur und die Fahrspur trennenden Fahrspurmarkierung durch das Kraftfahrzeug festgestellt und/oder prognostiziert werden. Die Spurwechselerkennungseinrichtung erkennt dann einen Spurwechsel, wenn das Kraftfahrzeug die Fahrspurmarkierung überquert oder wenn die Spurwechselerkennungseinrichtung prognostiziert, dass ein Überqueren der Fahrspurmarkierung innerhalb eines definierten Zeitraums, bevorzugt innerhalb eines Zeitraums von größer null Sekunden bis 3 Sekunden, besonders bevorzugt innerhalb von 1,6 Sekunden stattfindet. Die Feststellung und/oder die Prognose des Überquerens der Fahrspurmarkierung ist ein eindeutiger Hinweis, dass ein Fahrspurwechsel durchgeführt wird.

Konkret kann die Überwachungseinrichtung Fahrzeuge erfassen, die sich in einem definierten Überwachungsbereich befinden, wobei der Überwachungsbereich derart ausgebildet ist, dass die Überwachungseinrichtung Fahrzeuge erfasst, die sich auf der wenigstens einen Seitenspur in einem seitlich neben dem Kraftfahrzeug liegenden Seitenbereich befinden oder die innerhalb eines definierten Zeitraums, bevorzugt innerhalb eines Zeitraums von größer null Sekunden bis 10 Sekunden, besonders bevorzugt innerhalb von 3 Sekunden, in den Seitenbereich eintreten. Dadurch können für einen Fahrspurwechsel relevante Fahrzeuge, die sich in dem Seitenbereich befinden oder in den Seitenbereich eintreten, zuverlässig erfasst werden. Dieser Seitenbereich kann, in Fahrzeuglängsrichtung gesehen, nach vorne und/oder nach hinten um einen definierten, insbesondere starren, Sicherheitsbereich erweitert sein. Auf diese Weise wird die Verkehrssicherheit weiter erhöht.

In einer besonders bevorzugten Ausführung kann die Überwachungseinrichtung eine Spurmarkierungs-Erfassungseinrichtung aufweisen, mittels der die Lage einer, in Fahrzeugquerrichtung gesehen, äußeren Fahrspurmarkierung der wenigstens einen Seitenspur erfasst wird, wobei die Überwachungseinrichtung den Überwachungsbereich sowohl bei in der Fahrspur befindenden Fahrzeug als auch während eines Spurwechsels auf eine Seitenspur derart einstellt oder verstellt, dass sich der Überwachungsbereich stets ausgehend von dem Kraftfahrzeug bis hin zu der äußeren Fahrspurmarkierung der wenigstens einen Seitenspur erstreckt. Auf diese Weise werden einerseits sich auf der wenigstens einen Seitenspur befindende Fahrzeuge zuverlässig erfasst. Zudem wird sichergestellt, dass bei einem Fahrspurwechsel auf eine Seitenspur nur die für den Fahrspurwechsel relevanten Fahrzeuge erfasst werden.

Zudem kann der Überwachungsbereich, in Fahrzeugquerrichtung gesehen, ausgehend von dem Kraftfahrzeug eine definierte Breite, bevorzugt zwischen 2 und 4 Meter, besonders bevorzugt in etwa 3,30 Meter, aufweisen, wenn die äußere Fahrspurmarkierung der wenigstens einen Seitenspur durch die Spurmarkierungs-Erfassungseinrichtung nicht erkannt wird. So ist auch bei einem Nicht-Erkennen der äußeren Fahrspurmarkierung die Breite des Überwachungsbereichs definiert.

Gemäß einer ausdrücklich auch unabhängig von der vorstehenden Verfahrensführung beanspruchten Erfindungsidee wird ferner ein Fahrerassistenzsystem zur Unterstützung eines Fahrers eines Kraftfahrzeuges, insbesondere eines Nutzfahrzeuges, bei einem Fahrspurwechsel vorgeschlagen, mit einer Überwachungseinrichtung, mittels der Fahrzeuge, die sich in der Umgebung des Kraftfahrzeuges auf wenigstens einer seitlich an die Fahrspur des Kraftfahrzeuges angrenzenden Seitenspur befinden, erfasst werden können, mit einem durch den Fahrer betätigbaren Fahrtrichtungsanzeiger, mittels dem der Fahrer seine Absicht zur Durchführung eines Fahrspurwechsel auf eine Seitenspur ankündigt, mit einer Spurwechselerkennungseinrichtung zur Erkennung eines Fahrspurwechsels des Kraftfahrzeuges auf eine Seitenspur, und mit einer Signalausgabeeinrichtung zur Ausgabe eines ersten und eines zweiten Warnsignals an den Fahrer, wobei die Signalausgabeeinrichtung derart ausgebildet ist, das sie das erste Warnsignal ausgibt, wenn die Überwachungseinrichtung wenigstens ein Fahrzeug auf einer Seitenspur erfasst und der Fahrer den Fahrtrichtungsanzeiger derart betätigt, dass er einen Fahrspurwechsel auf diese Seitenspur ankündigt, und dass sie das zweite Warnsignal ausgibt, wenn die Überwachungseinrichtung wenigstens ein Fahrzeug auf einer Seitenspur erfasst, der Fahrer den Fahrtrichtungsanzeiger derart betätigt, dass er einen Fahrspurwechsel auf diese Seitenspur ankündigt, und zudem die Spurwechselerkennungseinrichtung erkennt, dass der Fahrer einen Fahrspurwechsel auf diese Seitenspur durchführt.

Mittels einer solchen Vorrichtung wird, wie bereits aus der Vorteilswürdigung des erfindungsgemäßen Verfahrens hervorgeht, die Sicherheit und der Fahrerkomfort bei einem Fahrspurwechsel deutlich erhöht.

Erfindungsgemäß ist die Signalausgabeeinrichtung derart ausgebildet sein, das das zweite Warnsignal eine höhere Warnintensität aufweist als das erste Warnsignal. Auf diese Weise bietet die Signalausgabeeinrichtung einen besonders hohen Komfort für den Fahrer des Kraftfahrzeuges. Erfindungsgemäß ist das erste Warnsignal als visuelles Signal und das zweite Warnsignal als akustisches Signal oder als visuelles und akustisches Signal ausgebildet. Besonders bevorzugt kann zudem eine durch den Fahrer betätigbare Aktivierungseinrichtung vorgesehen sein, mittels der die akustischen und/oder haptischen Signale aktiviert und deaktiviert werden können. Dadurch wird der Fahrerkomfort weiter erhöht.

In einer konkreten Ausgestaltung kann die Signalausgabeeinrichtung in einem, in Fahrzeugquerrichtung gesehen, linken und rechten Innenraumbereich des Kraftfahrzeuges jeweils wenigstens ein Signalausgabeelement aufweisen, mittels dem das erste und das zweite Warnsignal ausgegeben werden kann. Bevorzugt ist das wenigstens eine Signalausgabeelement an einer A-Säule des Kraftfahrzeuges festgelegt und/oder in Höhe der Außenspiegel des Kraftfahrzeuges angeordnet. Durch das Festlegen des wenigstens einen Signalausgabeelements an einer A-Säule des Kraftfahrzeuges kann das Signalausgabeelement auf einfache Weise in dem linken oder rechten Innenraumbereich des Kraftfahrzeuges angeordnet werden. Die Anordnung des Signalausgabeelements in Höhe der Außenspiegel ermöglicht bei einem Spurwechsel eine besonders einfache Erkennung und/oder Zuordnung der Warnsignale für den Fahrer des Kraftfahrzeuges.

Konkret kann die Signalausgabeeinrichtung zur Ausgabe visueller Signale wenigstens ein Leuchtelement, insbesondere wenigstens ein LED-Lichtband, aufweisen. Die Verwendung wenigstens eines LED-Lichtbandes ermöglicht eine zuverlässige und eindeutige Wiedergabe des ersten und/oder zweiten Warnsignals.

In einer weiteren Ausführung kann die Signalausgabeeinrichtung einen Signalgenerator aufweisen, mittels dem das akustische Signal generiert werden kann, und wobei der Signalgenerator mit wenigstens einem Lautsprecher gekoppelt ist, mittels dem das generierte akustische Signal ausgegeben werden kann. Auf diese Weise kann das akustische Signal zuverlässig wiedergegeben werden. Bevorzugt kann der Signalgenerator mit wenigstens zwei Lautsprechern gekoppelt sein, wobei wenigstens ein Lautsprecher, in Fahrzeugquerrichtung gesehen, in einem linken Innenraumbereich des Kraftfahrzeuges und wenigstens ein Lautsprecherin einem rechten Innenraumbereich des Kraftfahrzeuges angeordnet ist.

In einer bevorzugten Ausführungsform ist die erfindungsgemäße Spurwechselerkennungseinrichtung derart ausgebildet, dass mittels dieser ein Überqueren einer die Seitenspur und die Fahrspur trennenden Fahrspurmarkierung durch das Kraftfahrzeug festgestellt und/oder prognostiziert werden kann, wobei die Spurwechselerkennungseinrichtung dann einen Spurwechsel erkennt, wenn das Kraftfahrzeug die Fahrspurmarkierung überquert oder wenn die Spurwechselerkennungseinrichtung prognostiziert, dass ein Überqueren der Fahrspurmarkierung innerhalb eines definierten Zeitraums, bevorzugt innerhalb eines Zeitraums von größer null Sekunden bis 3 Sekunden, besonders bevorzugt innerhalb von 1,6 Sekunden, stattfindet. Auch hier wird auf die bereits erläuterten Vorteile der erfindungsgemäßen Verfahrensführung verwiesen.

Besonders bevorzugt weist die Überwachungseinrichtung eine Spurmarkierungs-Erfassungseinrichtung auf, mittels der die Lage einer, in Fahrzeugquerrichtung gesehen, äußeren Fahrspurmarkierung der wenigstens einen Seitenspur erfasst werden kann. Zudem erfasst die Überwachungseinrichtung Fahrzeuge, die sich in einem definierten Überwachungsbereich befinden, wobei mittels der Überwachungseinrichtung der Überwachungsbereich sowohl bei in der Fahrspur befindenden Fahrzeug als auch während eines Spurwechsels auf eine Seitenspur derart eingestellt und/oder verstellt werden kann, dass sich der Überwachungsbereich stets ausgehend von dem Kraftfahrzeug bis hin zu der äußeren Fahrspurmarkierung der wenigstens einen Seitenspur erstreckt. Auch hier wird auf die bereits erläuterten Vorteile der erfindungsgemäßen Verfahrensführung verwiesen.

Die sich mit dem erfindungsgemäßen Fahrzeug, insbesondere Kraftfahrzeug und/oder Nutzfahrzeug, ergebenden Vorteile sind identisch mit den vorstehend genannten Vorteilen. Auf deren Wiederholung wird hiermit verzichtet und insofern auf obige Ausführung verwiesen.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgen anhand von Zeichnungen lediglich beispielhaft näher erläutert.

Es zeigen:
- Fig. 1: ein Blockschaltbild, das den schematischen Aufbau der erfindungsgemäßen Vorrichtung zeigt;
- Fig. 2: ein erfindungsgemäßes Leuchtelement in einem Führerhaus eines Lastkraftwagens;
- Fig. 3a bis 3c: Prinzipskizzen zur Erläuterung der Funktionsweise der erfindungsgemäßen Vorrichtung bei einem ersten Überholmanöver erläutert wird;
- Fig. 4a bis 4c: Prinzipskizzen zur Erläuterung der Funktionsweise der erfindungsgemäßen Vorrichtung bei einem zweiten Überholmanöver erläutert wird; und
- Fig. 5a bis 5c: Prinzipskizzen zur Erläuterung der Funktionsweise der erfindungsgemäßen Vorrichtung bei einem Fahrspurwechsel erläutert wird.

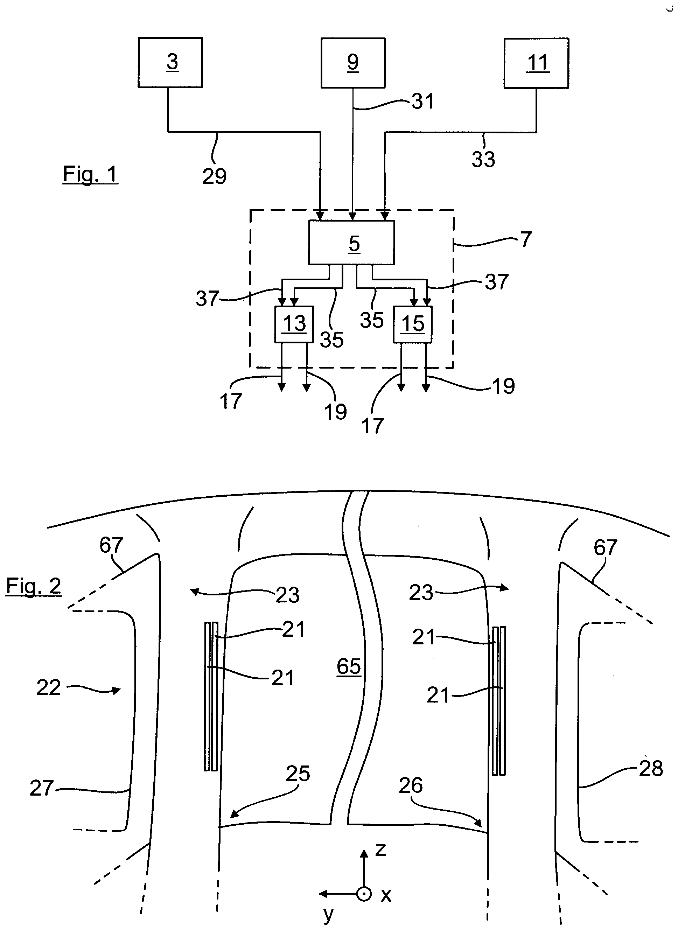

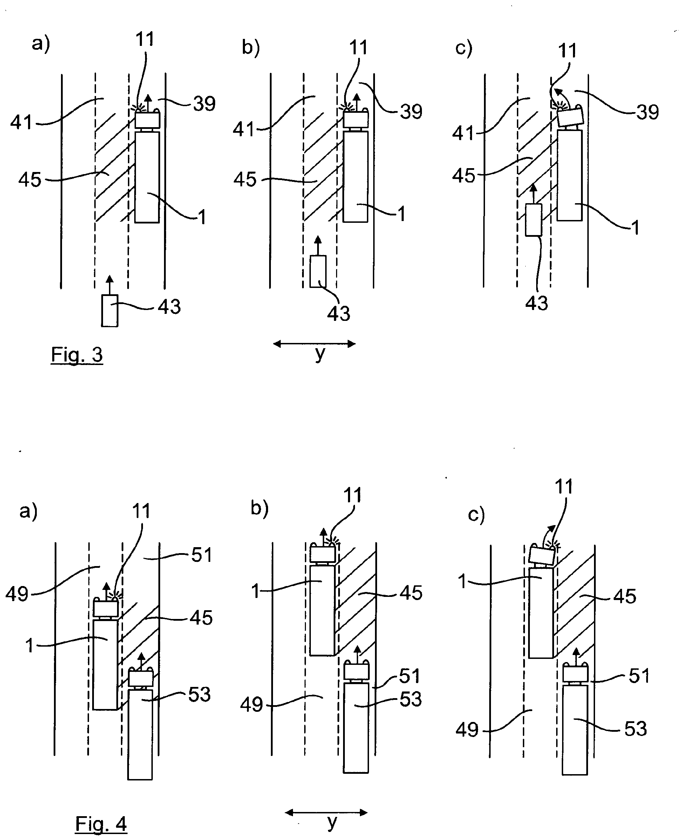

Die in Fig. 1 gezeigten Blockelemente stellen symbolisch einzelne Komponenten der erfindungsgemäßen Vorrichtung zur Unterstützung eines Lastkraftwagens 1 (Fig. 3) bei einem Fahrspurwechsel dar. Die Vorrichtung weist eine Überwachungseinrichtung 3 auf, mittels der Fahrzeuge, die sich in der Umgebung des Lastkraftwagens 1 auf wenigstens einer seitlich an die Fahrspur des Lastkraftwagens 1 angrenzenden Seitenspur befinden, erfasst werden. Die Überwachungseinrichtung 3 ist signaltechnisch mit einer Steuereinrichtung 5 einer Signalausgabeeinrichtung 7 des Lastkraftwagens 1 verbunden. Weiter weist die erfindungsgemäße Vorrichtung eine Spurwechselerkennungseinrichtung 9 auf, mittels der festgestellt werden kann, ob der Lastkraftwagen 1 eine die Fahrspur und eine Seitenspur trennende Fahrspurmarkierung überquert. Bei einem Überqueren der Fahrspurmarkierung erkennt die Spurwechselerkennungseinrichtung 9 einen Fahrspurwechsel des Lastkraftwagens 1 von der Fahrspur auf die Seitenspur. Auch die Spurwechselerkennungseinrichtung 9 ist signaltechnisch mit der Steuereinrichtung 5 verbunden. Des Weiteren ist ein durch den Fahrer betätigbarer Fahrtrichtungsanzeiger 11 des Lastkraftwagens 1 ebenfalls signaltechnisch mit der Steuereinrichtung 5 der Signalausgabeeinrichtung 7 verbunden.

Wie aus Fig. 1 weiter hervorgeht, weist die Signalausgabeeinrichtung 7 ein erstes Signalausgabeelement 13 und ein zweites Signalausgabeelement 15 auf, wobei jedes der beiden Signalausgabeelemente 13 und 15 mit der Steuereinrichtung 5 signaltechnisch verbunden sind. Mittels des ersten Signalausgabeelements 13 und des zweiten Signalausgabeelements 15 kann jeweils ein erstes Warnsignal 17 und ein zweites Warnsignal 19 an den Fahrer des Lastkraftwagens 1 ausgegeben werden. Das erste Warnsignal 17 ist hier als, beispielsweise orange-farbenes, visuelles Signal ausgebildet, während das zweite Warnsignal hier als Kombination eines, beispielsweise rot-farbenen, visuellen und eines akustischen Signals ausgebildet ist. Die akustischen Signale können mit einem in den Figuren nicht gezeigten Signalgenerator generiert werden und sind mit ebenfalls nicht gezeigten Lautsprechern des Lastkraftwagens 1 derart gekoppelt, dass die generierten akustischen Signale mittels der Lautsprecher ausgegeben werden können. Zur Ausgabe der beiden visuellen Signale weist jedes Signalausgabeelement 13 und 15 ein oder mehrere Leuchtelemente auf, hier lediglich beispielhaft zwei LED-Lichtbänder 21 (Fig. 2).

Des Weiteren ist das erste Signalausgabeelement 13, in Fahrzeugquerrichtung y gesehen, in einem, aus Fahrersicht gesehen, linken Innenraumbereich des Lastkraftwagens 1 angeordnet, während das zweite Signalausgabeelement 15 an einem rechten Innenraumbereich des Lastkraftwagens 1 angeordnet ist. In Fig. 2 ist ein Innenraum einer Fahrerkabine 22 des Lastkraftwagens 1 gezeigt. Die Fahrerkabine ist nach vorne durch eine Frontscheibe 65 und seitlich durch Seitenscheiben 67 begrenzt. Gemäß Fig. 2 sind die beiden LED-Lichtbänder 21 des ersten Signalausgabeelements 13 an einer Innenseite 23 einer linken A-Säule 25 des Lastkraftwagens 1 auf Höhe eines linken Außenspiegels 27 festgelegt, während die beiden LED-Lichtbänder 21 des zweiten Signalausgabeelements 15 an einer Innenseite 23 einer rechten A-Säule 26 des Lastkraftwagens 1 auf Höhe eines rechten Außenspiegels 28 festgelegt sind. Auf diese Weise sind die LED-Lichtbänder 21 bei einem Fahrspurwechsel für den Fahrer des Lastkraftwagens 1 gut sichtbar.

Werden von der Überwachungseinrichtung 3 ein oder mehrere Fahrzeuge auf einer Seitenspur erfasst, wird dies der Steuereinrichtung 5 mittels eines Überwachungs-Signals 29 mitgeteilt. Ebenso wird der Steuereinrichtung 5 die Betätigung des Fahrtrichtungsanzeigers 11 mittels eines Fahrtrichtungsanzeiger-Signals 31 übermittelt. Eine Erkennung eines Spurwechsels des Lastkraftwagens 1 auf eine Seitenspur wird der Steuereinrichtung 5 durch die Spurwechselerkennungseinrichtung 9 mit einem Spurwechsel-Signal 33 mitgeteilt. Werden mittels der Überwachungseinrichtung 3 ein oder mehrere Fahrzeuge auf einer Seitenspur erfasst und betätigt der Fahrer den Fahrtrichtungsanzeiger 11 derart, dass er einen Fahrspurwechsel auf die Seitenspur ankündigt, übermittelt die Steuereinrichtung 5 ein erstes Steuersignal 35 an das Signalausgabeelement 13 oder 15, das, aus Fahrersicht gesehen, auf der Seite des Lastkraftwagens 1, das heißt links oder rechts, angeordnet ist, in deren Richtung der Fahrspurwechsel erfolgt. Dieses Signalausgabeelement 13 oder 15 gibt dann das erste Warnsignal 17 aus. Wird durch die Spurwechselerkennungseinrichtung 9 zusätzlich erkannt, dass der Fahrer des Lastkraftwagens 1 einen Spurwechsel auf die Seitenspur durchführt, übermittelt die Steuereinrichtung 5 nicht das erste Steuersignal 35 sondern ein zweites Steuersignal 37 an das Signalausgabeelement 13 oder 15. Das Signalausgabeelement 13 oder 15 gibt dann das zweite Warnsignal 19 aus.

In den Fig. 3a bis 3c ist ein Überhohlmanöver gezeigt, bei der der auf einer Fahrspur 39 fahrende Lastkraftwagen 1 durch ein auf einer seitlich an die Fahrspur 39 des Lastkraftwagens 1 angrenzenden Seitenspur 41 fahrendes Fahrzeug 43 von hinten überholt wird. Der Fahrer des Lastkraftwagens 1 hat dabei den Fahrtrichtungsanzeiger 11 des Lastkraftwagens 1 derart betätigt, dass er einen Fahrspurwechsel auf die Seitenspur 41 ankündigt. In Fig. 3a befindet sich das Fahrzeug 43 hinter einem seitlich neben dem Lastkraftwagen 1 liegenden, und hier schraffiert dargestellten Lastkraftwagen-Seitenbereich 45. Die Überwachungseinrichtung 3 des Lastkraftwagens 1 kann das Fahrzeug 43 hier noch nicht erfassen, da sie so ausgelegt ist, dass sie lediglich Fahrzeuge erfasst, die sich in dem Lastkraftwagen-Seitenbereich 45 befinden oder die innerhalb eines definierten Zeitraums, hier beispielsweise 3 Sekunden, in den Lastkraftwagen-Seitenbereich 45 eintreten. Somit wird in der in Fig. 3a gezeigten Fahrsituation kein Warnsignal 13 oder 15 an den Fahrer des Lastkraftwagens ausgegeben. In Fig. 3b hat sich das Fahrzeug 43 dem Lastkraftwagen-Seitenbereich 45 derart angenähert, dass die Überwachungseinrichtung 3 das Fahrzeug 43 erfasst. In der in Fig. 3b gezeigten Fahrsituation wird daher das erste, visuelle Warnsignal 17 an den Fahrer des Lastkraftwagens 1 ausgegeben. In Fig. 3c befindet sich nunmehr das Fahrzeug 43 in dem Lastkraftwagen-Seitenbereich 45 und der Fahrer des Lastkraftwagens 1 beginnt damit, den Spurwechsel auf die Seitenspur 41 durchzuführen. Die Überwachungseinrichtung 3 erkennt das Fahrzeug 43 weiterhin und die Spurwechselerkennungseinrichtung 9 erkennt zudem den Fahrspurwechsel, da der Lastkraftwagen 1 eine die Fahrspur 39 und die Seitenspur 41 trennende Fahrspurmarkierung 47 überquert. Daher wird in der in Fig. 3c gezeigten Verkehrssituation das zweite, visuelle und akustische Warnsignal 19 an den Fahrer ausgegeben.

In den Fig. 4a bis 4c ist ein zweites Überhohlmanöver gezeigt, bei dem der auf einer Fahrspur 49 fahrende Lastkraftwagen 1 einen auf einer seitlich an die Fahrspur 49 angrenzenden Seitenspur 51 fahrenden Lastkraftwagen 53 von hinten überholt. Der Fahrer des Lastkraftwagens 1 hat dabei den Fahrtrichtungsanzeiger 11 derart betätigt, dass er einen Fahrspurwechsel auf die Seitenspur 51 ankündigt. In Fig. 4a befindet sich der Lastkraftwagen 53 in dem Seitenbereich 45 des Lastkraftwagens 1, wodurch das erste, visuelle Warnsignal 17 an den Fahrer des Lastkraftwagens 1 ausgegeben wird. In Fig. 4b befindet sich der Lastkraftwagen 53 außerhalb des Seitenbereichs 45, so dass das erste Warnsignal 17 nicht mehr an den Fahrer des Lastkraftwagens 1 ausgegeben wird. Somit kann der Fahrer des Lastkraftwagens 1, wie in Fig. 4c gezeigt, bei nicht ausgegebenen Warnsignalen 17 und 19 gefahrlos den Fahrspurwechsel von der Fahrspur 45 auf die Seitenspur 51 vollziehen.

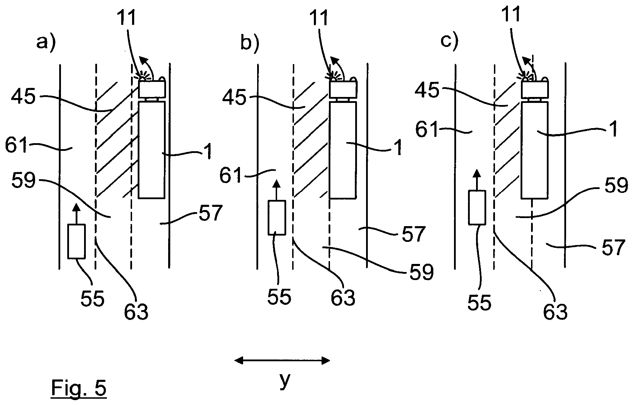

In den Fig. 5a bis 5c ist eine Verkehrssituation gezeigt, bei der der Lastkraftwagen 1 durch ein Fahrzeug 55 überholt wird, das sich nicht auf einer an eine Fahrspur 57 des Lastkraftwagens 1 angrenzenden Seitenspur 59 befindet, sondern auf einer, in Fahrzeugquerrichtung y gesehen, außen an die Seitenspur 59 angrenzenden Außenspur 61. Der Fahrer des Lastkraftwagens 1 führt während dieses Überholvorgangs einen Spurwechsel auf die Seitenspur 59 durch. Wie aus den Fig. 5a bis 5c hervorgeht, stellt die Überwachungseinrichtung 3 den Seitenbereich 45 sowohl bei ein der Fahrspur 57 fahrenden Lastkraftwagen 1 als auch bei einem Fahrspurwechsel des Lastkraftwagens 1 stets derart ein, dass er sich ausgehend von dem Lastkraftwagen 1 bis zu einer äußeren Fahrspurmarkierung 63 der Seitenspur 59 erstreckt. Die Überwachungseinrichtung 3 erfasst somit das auf der Außenspur 61 fahrende Fahrzeug 55 nicht, so dass bei dieser gefahrlosen Verkehrssituation kein Warnsignal 17 oder 19 an den Fahrer des Lastkraftwagens 1 ausgegeben wird.

### Bezugszeichenliste

- 1: **Lastkraftwagen**
- 3: Überwachungseinrichtung
- 5: Steuereinrichtung
- 7: Signalausgabeeinrichtung
- 9: Spurwechselerkennungseinrichtung
- 11: Fahrtrichtungsanzeiger
- 13: erstes Signalausgabeelement
- 15: zweites Signalausgabeelement
- 17: erstes Warnsignal
- 19: zweites Warnsignal
- 21: LED-Lichtband
- 23: Innenseite
- 25: linke A-Säule
- 26: rechte A-Säule
- 27: linker Außenspiegel
- 28: rechter Außenspiegel
- 29: Überwachungs-Signal
- 31: Fahrtrichtungsanzeiger-Signal
- 33: Spurwechsel-Signal
- 35: erstes Steuersignal
- 37: zweites Steuersignal
- 39: Fahrspur
- 41: Seitenspur
- 43: Fahrzeug
- 45: Seitenbereich
- 47: Fahrspurmarkierung
- 49: Fahrspur
- 51: Seitenspur
- 53: Lastkraftwagen
- 55: Fahrzeug
- 57: Fahrspur
- 59: Seitenspur
- 61: Außenspur
- 63: äußere Fahrspurmarkierung
- 65: Frontscheibe
- 67: Seitenscheibe

## Patentansprüche

1. Verfahren zur Unterstützung eines Fahrers eines Kraftfahrzeuges, insbesondere eines Nutzfahrzeuges, bei einem Fahrspurwechsel, mit einer Überwachungseinrichtung (3), mittels der Fahrzeuge (43, 53), die sich in der Umgebung des Kraftfahrzeuges (1) auf wenigstens einer seitlich an eine Fahrspur (39, 49, 57) des Kraftfahrzeuges (1) angrenzenden Seitenspur (41, 51, 59) befinden, erfasst werden, mit einem durch den Fahrer betätigbaren Fahrtrichtungsanzeiger (11), mittels dem der Fahrer seine Absicht zur Durchführung eines Fahrspurwechsel auf eine Seitenspur (41, 51, 59) ankündigt, mit einer Spurwechselerkennungseinrichtung (9) zur Erkennung eines Spurwechsels des Kraftfahrzeuges (1) auf eine Seitenspur (41, 51, 59), und mit einer Signalausgabeeinrichtung (7) zur Ausgabe eines ersten und eines zweiten Warnsignals (17, 19) an den Fahrer, wobei das erste Warnsignal (17) ausgegeben wird, wenn mittels der Überwachungseinrichtung (3) wenigstens ein Fahrzeug (43, 53) auf einer Seitenspur (41, 51, 59) erfasst wird und der Fahrer den Fahrtrichtungsanzeiger (11) derart betätigt, dass er einen Fahrspurwechsel auf diese Seitenspur (41, 51, 59) ankündigt, wobei das zweite Warnsignal (19) ausgegeben wird, wenn mittels der Überwachungseinrichtung (3) wenigstens ein Fahrzeug (43, 53) auf einer Seitenspur (41, 51, 59) erfasst wird, der Fahrer den Fahrtrichtungsanzeiger (11) derart betätigt, dass er einen Fahrspurwechsel auf diese Seitenspur (41, 51, 59) ankündigt, und zudem mittels der Spurwechselerkennungseinrichtung (9) ein Spurwechsel auf diese Seitenspur (41, 51, 59) erkannt wird, **dadurch gekennzeichnet, dass** das zweite Warnsignal (19) eine höhere Warnintensität aufweist als das erste Warnsignal (17), wobei das erste Warnsignal (17) als visuelles Signal und das zweite Warnsignal (19) als akustisches Signal oder als visuelles und akustisches ausgebildet ist.

2. Verfahren nach Anspruch 1, **dadurch gekennzeichnet, dass** die Signalausgabeeinrichtung (7) in einem, in Fahrzeugquerrichtung (y) gesehen, linken und rechten Innenraumbereich des Kraftfahrzeuges (1) jeweils wenigstens ein Signalausgabeelement (13, 15) aufweist, mittels dem das erste und das zweite Warnsignal (17, 19) ausgebbar ist, wobei bevorzugt vorgesehen ist, dass das wenigstens eine linksseitige Signalausgabeelement (13) nur bei einem Spurwechsel nach links die Warnsignale (17, 19) ausgibt und das wenigstens eine rechtsseitige Signalausgabeelement (19) nur bei einem Spurwechsel nach rechts die Warnsignale (17, 19) ausgibt.

3. Verfahren nach Anspruch 1 oder 2, **dadurch gekennzeichnet, dass** mittels der Spurwechselerkennungseinrichtung (9) ein Überqueren einer die Seitenspur (41, 51, 59) und die Fahrspur (39, 49, 57) trennenden Fahrspurmarkierung durch das Kraftfahrzeug (1) feststellbar und/oder prognostizierbar ist, und dass die Spurwechselerkennungseinrichtung (9) dann einen Spurwechsel erkennt, wenn das Kraftfahrzeug (1) die Fahrspurmarkierung (63) überquert oder wenn die Spurwechselerkennungseinrichtung (9) prognostiziert, dass ein Überqueren der Fahrspurmarkierung (63) innerhalb eines definierten Zeitraums, bevorzugt innerhalb eines Zeitraums von größer null Sekunden bis 3 Sekunden, besonders bevorzugt innerhalb von 1,6 Sekunden, stattfindet.

4. Verfahren nach einem der vorhergehenden Ansprüche, **dadurch gekennzeichnet, dass** die Überwachungseinrichtung (3) Fahrzeuge (43, 53) erfasst, die sich in einem definierten Überwachungsbereich befinden, wobei der Überwachungsbereich derart ausgebildet ist, dass die Überwachungseinrichtung (3) Fahrzeuge (43, 53) erfasst, die sich auf der wenigstens einen Seitenspur (41, 51, 59) in einem seitlich neben dem Kraftfahrzeug (1) liegenden Seitenbereich (45) befinden oder die innerhalb eines definierten Zeitraums, bevorzugt innerhalb eines Zeitraums von größer null Sekunden bis 10 Sekunden, besonders bevorzugt innerhalb von 3 Sekunden, in den Seitenbereich (45) eintreten.

5. Verfahren nach Anspruch 4, **dadurch gekennzeichnet, dass** die Überwachungseinrichtung (3) eine Spurmarkierungs-Erfassungseinrichtung aufweist, mittels der die Lage einer, in Fahrzeugquerrichtung (y) gesehen, äußeren Fahrspurmarkierung (63) der wenigstens einen Seitenspur (59) erfasst wird, wobei die Überwachungseinrichtung (3) den Überwachungsbereich sowohl bei in der Fahrspur (39, 49, 57) befindendem Kraftfahrzeug (1) als auch während eines Spurwechsels auf eine Seitenspur (59) derart einstellt und/oder verstellt, dass sich der Überwachungsbereich stets ausgehend von dem Kraftfahrzeug (1) bis hin zu der äußeren Fahrspurmarkierung (63) der wenigstens einen Seitenspur (59) erstreckt.

6. Verfahren nach Anspruch 4 oder 5, **dadurch gekennzeichnet, dass** der Überwachungsbereich (3), in Fahrzeugquerrichtung (y) gesehen, ausgehend von dem Kraftfahrzeug (1) eine definierte Breite, bevorzugt zwischen 2 und 4 Meter, besonders bevorzugt in etwa 3,30 Meter, aufweist, wenn die äußere Fahrspurmarkierung (63) der wenigstens einen Seitenspur (59) durch die Spurmarkierungs-Erfassungseinrichtung nicht erkannt wird.

7. Fahrerassistenzsystem zur Unterstützung eines Fahrers eines Kraftfahrzeuges, insbesondere eines Nutzfahrzeuges, bei einem Fahrspurwechsel, insbesondere zur Durchführung eines Verfahrens nach einem der vorhergehenden Ansprüche, mit einer Überwachungseinrichtung(3), mittels der Fahrzeuge (43, 53), die sich in der Umgebung des Kraftfahrzeugs (1) auf wenigstens einer seitlich an die Fahrspur (39, 49, 57) des Kraftfahrzeuges (1) angrenzenden Seitenspur (41, 51, 59) befinden, erfassbar sind, mit einem durch den Fahrer betätigbaren Fahrtrichtungsanzeiger (11), mittels dem der Fahrer seine Absicht zur Durchführung eines Fahrspurwechsels auf eine Seitenspur (41, 51, 59) ankündigt, mit einer Spurwechselerkennungseinrichtung (9) zur Erkennung eines Spurwechsels des Kraftfahrzeuges (1) auf eine Seitenspur (41, 51, 59), und mit einer Signalausgabeeinrichtung (7) zur Ausgabe eines ersten und eines zweiten Warnsignals (17, 19) an den Fahrer, wobei die Signalausgabeeinrichtung (7) derart ausgebildet ist, dass sie das erste Warnsignal (17) ausgibt, wenn die Überwachungseinrichtung (3) wenigstens ein Fahrzeug (43, 53) auf einer Seitenspur (41, 51, 59) erfasst und der Fahrer den Fahrtrichtungsanzeiger (11) derart betätigt, dass er einen Fahrspurwechsel auf diese Seitenspur (41, 51, 59) ankündigt, und dass sie das zweite Warnsignal (19) ausgibt, wenn die Überwachungseinrichtung (3) wenigstens ein Fahrzeug (43, 53) auf einer Seitenspur (41, 51, 59) erfasst, der Fahrer den Fahrtrichtungsanzeiger (11) derart betätigt, dass er einen Fahrspurwechsel auf diese Seitenspur (41, 51, 59) ankündigt, und zudem die Spurwechselerkennungseinrichtung (9) erkennt, dass der Fahrer einen Spurwechsel auf diese Seitenspur (41, 51, 59) durchführt, **dadurch gekennzeichnet, dass** die Signalausgabeeinrichtung (7) derart ausgebildet ist, dass das zweite Warnsignal (19) eine höhere Warnintensität aufweist als das erste Warnsignal (17), wobei das erste Warnsignal (17) als visuelles Signal und das zweite Warnsignal (19) als akustisches Signal oder als visuelles und akustisches Signal ausgebildet ist.

8. Fahrerassistenzsystem nach Anspruch 7, **dadurch gekennzeichnet, dass** die Signalausgabeeinrichtung (7) in einem, in Fahrzeugquerrichtung (y) gesehen, linken und rechten Innenraumbereich des Kraftfahrzeuges (1) jeweils wenigstens ein Signalausgabeelement (13, 15) aufweist, mittels dem das erste und das zweite Warnsignal (17, 19) ausgebbar ist, wobei bevorzugt vorgesehen ist, dass das wenigstens eine Signalausgabeelement (13, 15) an einer A-Säule (25, 26) des Kraftfahrzeuges (1) festgelegt ist und/oder in Höhe der Außenspiegel (27, 28) des Kraftfahrzeuges (1) angeordnet ist.

9. Fahrerassistenzsystem nach Anspruch 7 oder 8, **dadurch gekennzeichnet, dass** die Signalausgabeeinrichtung (7) zur Ausgabe visueller Signale wenigstens ein Leuchtelement (21), insbesondere wenigstens ein LED-Lichtband, aufweist.

10. Fahrerassistenzsystem nach einem der Ansprüche 7 bis 9, **dadurch gekennzeichnet, dass** die Signalausgabeeinrichtung (7) einen Signalgenerator aufweist, mittels dem das akustische Signal generierbar ist, und wobei der Signalgenerator mit wenigstens einem Lautsprecher gekoppelt ist, mittels dem das generierte akustische Signal ausgebbar ist.

11. Fahrerassistenzsystem nach einem der Ansprüche 7 bis 10, **dadurch gekennzeichnet, dass** die Spurwechselerkennungseinrichtung (9) derart ausgebildet ist, dass mittels dieser ein Überqueren einer die Seitenspur (41, 51, 59) und die Fahrspur (39, 49, 57) trennenden Fahrspurmarkierung durch das Kraftfahrzeug (1) feststellbar und/oder prognostizierbar ist, wobei die Spurwechselerkennungseinrichtung (9) dann einen Spurwechsel erkennt, wenn das Kraftfahrzeug (1) die Fahrspurmarkierung überquert oder wenn die Spurwechselerkennungseinrichtung (9) prognostiziert, dass ein Überqueren der Fahrspurmarkierung innerhalb eines definierten Zeitraums, bevorzugt innerhalb eines Zeitraums von größer null Sekunden bis 3 Sekunden, besonders bevorzugt innerhalb von 1,6 Sekunden, stattfindet.

12. Fahrerassistenzsystem nach einem der Ansprüche 7 bis 11, **dadurch gekennzeichnet, dass** die Überwachungseinrichtung (3) eine Spurmarkierungs-Erfassungseinrichtung aufweist, mittels der die Lage einer, in Fahrzeugquerrichtung (y) gesehen, äußeren Fahrspurmarkierung (63) der wenigstens einen Seitenspur (59) erfassbar ist, und dass die Überwachungseinrichtung (3) Fahrzeuge (43, 53) erfasst, die sich in einem definierten Überwachungsbereich befinden, wobei mittels der Überwachungseinrichtung (3) der Überwachungsbereich sowohl bei in der Fahrspur (39, 49, 57) befindendem Kraftfahrzeug (1) als auch während eines Spurwechsels auf eine Seitenspur (41, 51, 59) derart einstellbar und/oder verstellbar ist, dass sich der Überwachungsbereich stets ausgehend von dem Kraftfahrzeug (1) bis hin zu der äußeren Fahrspurmarkierung (63) der wenigstens einen Seitenspur (59) erstreckt.

13. Fahrzeug, insbesondere Kraftfahrzeug und/oder Nutzfahrzeug, mit einem Fahrerassistenzsystem nach einem der Ansprüche 7 bis 12.

## Claims

1. Method for assisting a driver of a motor vehicle, in particular a commercial vehicle, during a lane change, with a monitoring device (3) which is used to detect vehicles (43, 53) which are in the environment of the motor vehicle (1) in at least one side lane (41, 51, 59) laterally adjoining a lane (39, 49, 57) of the motor vehicle (1), with a direction indicator (11) which can be actuated by the driver and is used by the driver to announce his intention to carry out a lane change to a side lane (41, 51, 59), with a lane change detection device (9) for detecting a lane change of the motor vehicle (1) to a side lane (41, 51, 59), and with a signal output device (7) for outputting a first and a second warning signal (17, 19) to the driver, wherein the first warning signal (17) is output if the monitoring device (3) is used to detect at least one vehicle (43, 53) in a side lane (41, 51, 59) and the driver actuates the direction indicator (11) in such a manner that he announces a lane change to this side lane (41, 51, 59), wherein the second warning signal (19) is output if the monitoring device (3) is used to detect at least one vehicle (43, 53) in a side lane (41, 51, 59), the driver actuates the direction indicator (11) in such a manner that he announces a lane change to this side lane (41, 51, 59) and the lane change detection device (9) is also used to detect a lane change to this side lane (41, 51, 59), **characterized in that** the second warning signal (19) has a higher warning intensity than the first warning signal (17), wherein the first warning signal (17) is in the form of a visual signal and the second warning signal (19) is in the form of an acoustic signal or a visual and acoustic signal.

2. Method according to Claim 1, **characterized in that** the signal output device (7) respectively has, in a left-hand and right-hand interior region of the motor vehicle (1), as seen in the vehicle transverse direction (y), at least one signal output element (13, 15) which can be used to output the first and second warning signals (17, 19), wherein provision is preferably made for the at least one left-hand signal output element (13) to output the warning signals (17, 19) only in the event of a lane change to the left and for the at least one right-hand signal output element (19) to output the warning signals (17, 19) only in the event of a lane change to the right.

3. Method according to Claim 1 or 2, **characterized in that** the lane change detection device (9) can be used to determine and/or predict crossing of a lane marking, which separates the side lane (41, 51, 59) and the lane (39, 49, 57), by the motor vehicle (1), and **in that** the lane change detection device (9) detects a lane change when the motor vehicle (1) crosses the lane marking (63) or when the lane change detection device (9) predicts that the lane marking (63) will be crossed within a defined period, preferably within a period of greater than zero seconds to 3 seconds, particularly preferably within 1.6 seconds.

4. Method according to one of the preceding claims, **characterized in that** the monitoring device (3) detects vehicles (43, 53) which are in a defined monitoring region, wherein the monitoring region is designed in such a manner that the monitoring device (3) detects vehicles (43, 53) which are in the at least one side lane (41, 51, 59) in a side region (45) laterally beside the motor vehicle (1) or will enter the side region (45) within a defined period, preferably within a period of greater than zero seconds to 10 seconds, particularly preferably within 3 seconds.

5. Method according to Claim 4, **characterized in that** the monitoring device (3) has a lane marking detection device which is used to detect the position of an outer lane marking (63) of the at least one side lane (59), as seen in the vehicle transverse direction (y), wherein the monitoring device (3) sets and/or adjusts the monitoring region, both when there is a motor vehicle (1) in the lane (39, 49, 57) and during a lane change to a side lane (59), in such a manner that the monitoring region always extends from the motor vehicle (1) to the outer lane marking (63) of the at least one side lane (59).

6. Method according to Claim 4 or 5, **characterized in that** the monitoring region (3) has, as seen in the vehicle transverse direction (y), starting from the motor vehicle (1), a defined width, preferably between 2 and 4 metres, particularly preferably approximately 3.30 metres, if the outer lane marking (63) of the at least one side lane (39) is not detected by the lane marking detection device.

7. Driver assistance system for assisting a driver of a motor vehicle, in particular a commercial vehicle, during a lane change, in particular for carrying out a method according to one of the preceding claims, with a monitoring device (3) which can be used to detect vehicles (43, 53) which are in the environment of the motor vehicle (1) in at least one side lane (41, 51, 59) laterally adjoining the lane (39, 49, 57) of the motor vehicle (1), with a direction indicator (11) which can be actuated by the driver and is used by the driver to announce his intention to carry out a lane change to a side lane (41, 51, 59), with a lane change detection device (9) for detecting a lane change of the motor vehicle (1) to a side lane (41, 51, 59), and with a signal output device (7) for outputting a first and a second warning signal (17, 19) to the driver, wherein the signal output device (7) is designed in such a manner that it outputs the first warning signal (17) if the monitoring device (3) detects at least one vehicle (43, 53) in a side lane (41, 51, 59) and the driver actuates the direction indicator (11) in such a manner that he announces a lane change to this side lane (41, 51, 59), and outputs the second warning signal (19) if the monitoring device (3) detects at least one vehicle (43, 53) in a side lane (41, 51, 59), the driver actuates the direction indicator (11) in such a manner that he announces a lane change to this side lane (41, 51, 59) and the lane change detection device (9) also detects that the driver is carrying out a lane change to this side lane (41, 51, 59), **characterized in that** the signal output device (7) is designed in such a manner that the second warning signal (19) has a higher warning intensity than the first warning signal (17), wherein the first warning signal (17) is in the form of a visual signal and the second warning signal (19) is in the form of an acoustic signal or a visual and acoustic signal.

8. Driver assistance system according to Claim 7, **characterized in that** the signal output device (7) respectively has, in a left-hand and right-hand interior region of the motor vehicle (1), as seen in the vehicle transverse direction (y), at least one signal output element (13, 15) which can be used to output the first and second warning signals (17, 19), wherein provision is preferably made for the at least one signal output element (13) to be secured to an A-pillar (25, 26) of the motor vehicle (1) and/or to be arranged at the level of the exterior mirrors (27, 28) of the motor vehicle (1).

9. Driver assistance system according to Claim 7 or 8, **characterized in that** the signal output device (7) has at least one lighting element (21), in particular at least one LED light strip, for outputting visual signals.

10. Driver assistance system according to one of Claims 7 to 9, **characterized in that** the signal output device (7) has a signal generator which can be used to generate the acoustic signal, and wherein the signal generator is coupled to at least one loudspeaker which can be used to output the acoustic signal which has been generated.

11. Driver assistance system according to one of Claims 7 to 10, **characterized in that** the lane change detection device (9) is designed in such a manner that it can be used to determine and/or predict crossing of a lane marking, which separates the side lane (41, 51, 59) and the lane (39, 49, 57), by the motor vehicle (1), wherein the lane change detection device (9) detects a lane change when the motor vehicle (1) crosses the lane marking or when the lane change detection device (9) predicts that the lane marking will be crossed within a defined period, preferably within a period of greater than zero seconds to 3 seconds, particularly preferably within 1.6 seconds.

12. Driver assistance system according to one of Claims 7 to 11, **characterized in that** the monitoring device (3) has a lane marking detection device which can be used to detect the position of an outer lane marking (63) of the at least one side lane (59), as seen in the vehicle transverse direction (y), and **in that** the monitoring device (3) detects vehicles (43, 53) which are in a defined monitoring region, wherein the monitoring device (3) can be used to set and/or adjust the monitoring region, both when there is a motor vehicle (1) in the lane (39, 49, 57) and during a lane change to a side lane (41, 51, 59), in such a manner that the monitoring region always extends from the motor vehicle (1) to the outer lane marking (63) of the at least one side lane (59).

13. Vehicle, in particular motor vehicle and/or commercial vehicle, having a driver assistance system according to one of Claims 7 to 12.

## Revendications

1. Procédé d'assistance à un conducteur d'un véhicule automobile, notamment d'un véhicule utilitaire, lors d'un changement de voie, à l'aide d'un dispositif de surveillance (3), qui détecte des véhicules (43, 53) qui se trouvent dans l'environnement du véhicule automobile (1) sur au moins une voie latérale (41, 51, 59) adjacente latéralement à une voie de roulement (39, 49, 57) du véhicule automobile (1), d'un indicateur de sens de roulement (11) qui peut être actionné par le conducteur et au moyen duquel le conducteur indique son intention de changer de voie de roulement vers une voie latérale (41, 51, 59), d'un dispositif de détection de changement de voie (9) destiné à détecter un changement de voie du véhicule automobile (1) vers une voie latérale (41, 51, 59), et d'un dispositif de délivrance de signaux (7) destiné à délivrer un premier et un deuxième signal d'avertissement (17, 19) au conducteur, le premier signal d'avertissement (17) étant délivré lorsqu'au moins un véhicule (43, 53) est détecté sur une voie latérale (41, 51, 59) au moyen du dispositif de surveillance (3) et que le conducteur actionne l'indicateur de sens de roulement (11) de faon à indiquer un changement de voie de roulement vers cette voie latérale (41, 51, 59), le deuxième signal d'avertissement (19) étant délivré lorsque le dispositif de surveillance (3) détecte au moins un véhicule (43, 53) sur une voie latérale (41, 51, 59), que le conducteur actionne l'indicateur de sens de roulement (11) de façon à indiquer un changement de voie de roulement vers cette voie latérale (41, 51, 59), et qu'un changement de voie vers cette voie latérale (41, 51, 59) est également détecté à l'aide du dispositif de détection de changement de voie (9), **caractérisé en ce que**
le deuxième signal d'avertissement (19) a une intensité d'avertissement supérieure à celle du premier signal d'avertissement (17), le premier signal d'avertissement (17) étant conçu comme un signal visuel et le deuxième signal d'avertissement (19) étant conçu comme un signal acoustique ou comme un signal visuel et acoustique.

2. Procédé selon la revendication 1, **caractérisé en ce que** le dispositif de délivrance de signaux (7) comporte au moins un élément de délivrance de signaux (13, 15), qui peut délivrer le premier et le deuxième signal d'avertissement (17, 19), dans une zone gauche et une zone droite de l'habitacle du véhicule automobile (1), vues dans la direction transversale (y) du véhicule, l'au moins un élément de délivrance de signaux côté gauche (13) étant de préférence prévu pour délivrer les signaux d'avertissement (17, 19) seulement lors d'un changement de voie vers la gauche et l'au moins un élément de délivrance de signaux côté droit (19) délivrant les signaux d'avertissement (17, 19) seulement lors d'un changement de voie vers la droite.

3. Procédé selon la revendication 1 ou 2, **caractérisé en ce que** le dispositif de détection de changement de voie (9) permet de détecter et/ou prédire le franchissement d'un marquage de voie de roulement, séparant la voie latérale (41, 51, 59) et la voie de roulement (39, 49, 57), par le véhicule automobile (1) et **en ce que** le dispositif de détection de changement de voie (9) détecte un changement de voie seulement lorsque le véhicule automobile (1) franchit le marquage de voie de roulement (63) ou lorsque le dispositif de détection de changement de voie (9) prédit que le franchissement du marquage de voie de roulement (63) est effectué dans un intervalle de temps défini, de préférence un intervalle de temps supérieur à zéro seconde jusqu'à 3 secondes, de manière particulièrement préférée en 1,6 seconde.

4. Procédé selon l'une des revendications précédentes, **caractérisé en ce que** le dispositif de surveillance (3) détecte des véhicules (43, 53) qui se trouvent dans une zone de surveillance définie, la zone de surveillance étant conçue de manière à ce que le dispositif de surveillance (3) détecte des véhicules (43, 53) qui se trouvent sur l'au moins une voie latérale (41, 51, 59) dans une zone latérale (45) située latéralement à côté du véhicule automobile (1) ou qui pénètrent dans la zone latérale (45) dans un intervalle de temps défini, de préférence dans un intervalle de temps supérieur à zéro seconde jusqu'à 10 secondes, de manière particulièrement préférée en 3 secondes.

5. Procédé selon la revendication 4, **caractérisé en ce que** le dispositif de surveillance (3) comporte un dispositif de détection de marquage de voie, qui détecte la position d'un marquage de voie de roulement extérieur (63) de l'au moins une voie latérale (59), vu dans la direction transversale (y) du véhicule, le dispositif de surveillance (3) réglant et/ou déplaçant la zone de surveillance aussi bien lorsque le véhicule automobile (1) se trouve dans la voie de roulement (39, 49, 57) que lors d'un changement de voie vers une voie latérale (59) de manière à ce que la zone de surveillance s'étende toujours du véhicule automobile (1) jusqu'au marquage de voie de roulement extérieur (63) de l'au moins une voie latérale (59).

6. Procédé selon la revendication 4 ou 5, **caractérisé en ce que**, vue dans la direction transversale (y) du véhicule, à partir du véhicule automobile (1), la zone de surveillance (3) a une largeur définie, de préférence comprise entre 2 et 4 mètres, de manière particulièrement préférée d'environ 3,30 mètres, si le marquage de voie de roulement extérieur (63) de l'au moins une voie latérale (59) n'est pas détecté par le dispositif de détection de marquage de voie.

7. Système d'assistance au conducteur destiné à assister un conducteur d'un véhicule automobile, notamment d'un véhicule utilitaire, lors d'un changement de voie de roulement, notamment pour mettre en oeuvre un procédé selon l'une des revendications précédentes, ledit système comprenant un dispositif de surveillance (3), qui détecte des véhicules (43, 53) qui se trouvent dans l'environnement du véhicule automobile (1) sur au moins une voie latérale (41, 51, 59) adjacente latéralement à une voie de roulement (39, 49, 57) du véhicule automobile (1), un indicateur de sens de roulement (11) qui peut être actionné par le conducteur et au moyen duquel le conducteur indique son intention de changer de voie de roulement vers une voie latérale (41, 51, 59), un dispositif de détection de changement de voie (9) destiné à détecter un changement de voie du véhicule automobile (1) vers une voie latérale (41, 51, 59), et un dispositif de délivrance de signaux (7) destiné à délivrer un premier et un deuxième signal d'avertissement (17, 19) au conducteur, le dispositif de délivrance de signaux (7) étant conçu pour délivrer le premier signal d'avertissement (17) lorsque le dispositif de surveillance (3) détecte au moins un véhicule (43, 53) sur une voie latérale (41, 51, 59) et que le conducteur actionne l'indicateur de sens de roulement (11) de façon à indiquer un changement de voie de roulement vers cette voie latérale (41, 51, 59), et pour délivrer le deuxième signal d'avertissement (19) lorsque le dispositif de surveillance (3) détecte au moins un véhicule (43, 53) sur une voie latérale (41, 51, 59), que le conducteur actionne l'indicateur de sens de roulement (11) de façon à indiquer un changement de voie de roulement vers cette voie latérale (41, 51, 59), et que le dispositif de détection de changement de voie (9) détecte également que le conducteur effectue un changement de voie vers cette voie latérale (41, 51, 59),
**caractérisé en ce que** le dispositif de délivrance de signaux (7) est conçu de manière à ce que le deuxième signal d'avertissement (19) ait une intensité d'avertissement supérieure à celle du premier signal d'avertissement (17), le premier signal d'avertissement (17) étant conçu comme un signal visuel et le deuxième signal d'avertissement (19) étant conçu comme un signal acoustique ou comme un signal visuel et acoustique.

8. Système d'assistance au conducteur selon la revendication 7, **caractérisé en ce que** le dispositif de délivrance de signaux (7) comporte au moins un élément de délivrance de signaux (13, 15), qui peut délivrer le premier et le deuxième signal d'avertissement (17, 19), dans une zone gauche et une zone droite de l'habitacle du véhicule automobile (1), vues dans la direction transversale (y) du véhicule, l'au moins un élément de délivrance de signaux (13, 15) étant de préférence prévu pour être fixé à une colonne A (25, 26) du véhicule automobile (1) et/ou être disposé au niveau des rétroviseurs extérieurs (27, 28) du véhicule automobile (1).

9. Système d'assistance au conducteur selon la revendication 7 ou 8, **caractérisé en ce que**, pour délivrer des signaux visuels, le dispositif de délivrance de signaux (7) comporte au moins un élément d'éclairage (21), notamment au moins une rampe lumineuse à LED.

10. Système d'assistance au conducteur selon l'une des revendications 7 à 9, **caractérisé en ce que** le dispositif de délivrance de signaux (7) comporte un générateur de signal permettant de générer le signal acoustique, et le générateur de signal étant couplé à au moins un haut-parleur permettant de délivrer le signal acoustique.

11. Système d'assistance au conducteur selon l'une des revendications 7 à 10, **caractérisé en ce que** le dispositif de détection de changement de voie (9) est conçu pour détecter et/ou prédire le franchissement d'un marquage de voie de roulement, séparant la voie latérale (41, 51, 59) et la voie de roulement (39, 49, 57), par le véhicule automobile (1), le dispositif de détection de changement de voie (9) détecte un changement de voie seulement lorsque le véhicule automobile (1) franchit le marquage de voie de roulement ou lorsque le dispositif de détection de changement de voie (9) prédit que le franchissement du marquage de voie de roulement est effectué dans un intervalle de temps défini, de préférence un intervalle de temps supérieur à zéro seconde jusqu'à 3 secondes, de manière particulièrement préférée en 1,6 seconde.

12. Système d'assistance au conducteur selon l'une des revendications 7 à 11, **caractérisé en ce que** le dispositif de surveillance (3) comporte un dispositif de détection de marquage de voie, qui détecte la position d'un marquage de voie de roulement extérieur (63) de l'au moins une voie latérale (59), vu dans la direction transversale (y) du véhicule, et **en ce que** le dispositif de surveillance (3) détecte des véhicules (43, 53) qui se trouvent dans une zone de surveillance définie, le dispositif de surveillance (3) réglant et/ou déplaçant la zone de surveillance aussi bien lorsque le véhicule automobile (1) se trouve sur la voie de roulement (39, 49, 57) que lors d'un changement de voie vers une voie latérale (41, 51, 59) de manière à ce que la zone de surveillance s'étende toujours du véhicule automobile (1) jusqu'au marquage de voie de roulement extérieur (63) de l'au moins une voie latérale (59).

13. Véhicule, notamment automobile et/ou véhicule utilitaire, comprenant un système d'assistance au conducteur selon l'une des revendications 7 à 12.
